# EUROPEAN PATENT SPECIFICATION

(11) **EP 4 264 856 B1**
(45) Date of publication and mention of the grant of the patent: **20.05.2026**
(21) Application number: 21709685.8
(22) Date of filing: 03.03.2021
(51) Int. Cl.: H04L 65/1073, H04L 65/1016, H04L 69/40, H04L 61/4588, H04L 65/1045, H04L 65/1104

(54) **FIRST IMS NODE, SECOND SERVER, SUBSCRIBER SERVER AND METHODS IN A COMMUNICATIONS NETWORK**
ERSTER IMS-KNOTEN, ZWEITER SERVER, TEILNEHMERSERVER UND VERFAHREN IN EINEM KOMMUNIKATIONSNETZWERK
PREMIER NOEUD IMS, SECOND SERVEUR, SERVEUR D'ABONNÉ ET PROCÉDÉS DANS UN RÉSEAU DE COMMUNICATION

(30) Priority: 16.12.2020 EP 20383106
(43) Date of publication of application: 25.10.2023
(73) Proprietor: Telefonaktiebolaget LM Ericsson (publ), 164 83 Stockholm (SE)
(72) Inventor: MERINO VAZQUEZ, Emiliano, 28916 Leganés Madrid (ES); RUIZ BALMASEDA, Cristina, 28290 LAS MATAS Madrid (ES); CASTELLANOS ZAMORA, David, 28026 MADRID (ES); DE GREGORIO RODRIGUEZ, Jesus Angel, 28660 Boadilla del Monte Madrid (ES)
(74) Representative: Ericsson
(86) International application number: PCT/EP2021/055393
(87) International publication number: WO 2022/128165

(56) References cited:
- US-A1- 2010 217 875
- ERICSSON ET AL: "Update of SBA HSS Services for IMS", vol. SA WG2, no. Sapporo, Japan; 20190624 - 20190628, 2 September 2019 (2019-09-02), XP051759041, Retrieved from the Internet <URL:http://www.3gpp.org/ftp/3guInternal/3GPP_Ultimate_CRPacks/SP-190611.zip> [retrieved on 20190902]
- "3rd Generation Partnership Project; Technical Specification Group Services and System Aspects; IP Multimedia Subsystem (IMS); Stage 2 (Release 16)", 1 December 2020 (2020-12-01), XP051966661, Retrieved from the Internet <URL:https://ftp.3gpp.org/tsg_sa/WG2_Arch/Latest_SA2_Specs/DRAFT_INTERIM/23228-g60_CRs_implemented.zip 23228-g60_CRs_implemented.docx> [retrieved on 20201201]

## Description

### TECHNICAL FIELD

Embodiments herein relate to a first Internet Protocol Multimedia Subsystem (IMS) node, a second server, a subscriber server and methods therein. In some aspects, they relate to handling a setup of a session for communication with a User Equipment (UE) in a communications network.

### BACKGROUND

In a typical wireless communication network, wireless devices, also known as wireless communication devices, mobile stations, stations (STA) and/or User Equipments (UE), communicate via a Local Area Network such as a Wi-Fi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in Fifth Generation (5G) telecommunications. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a 5G network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

The Internet Protocol (IP) Multimedia Subsystem (IMS) is a well-known 3GPP standard allowing sessions to be setup between two or more parties for a broad variety of services such as voice or video call, interactive messaging sessions or third-party specific applications. A protocol chosen by 3GPP is the Session Initiation Protocol (SIP). The SIP provides a mechanism for registration of UEs and for setting up multimedia sessions. The SIP REGISTER method enables the registration of user agent's current location and the SIP INVITE method enables the setting up of a session. IMS is implemented by Public Land Mobile Network (PLMN) operators as an architectural framework for delivering IP multimedia services to their subscribers.

### Functional elements in the IMS network

An IMS network comprises several network entities, some of which are discussed here.

### Home Subscriber Server (HSS)

A HSS is a subscriber database comprising subscriber profiles, performs authentication and authorization, and provides information on services provisioned for subscribers and information on the location and IP address of a subscriber.

### Serving Call Session Control Function (S-CSCF)

An S-CSCF is a SIP server and is the central signaling node in the IMS network and performs session control services for the UE. It handles SIP registrations and is responsible for forwarding SIP messages to the correct application server. The S-CSCF may behave as a SIP-proxy, i.e. it accepts requests and services them internally or forwards them on

### Interrogating Call Session Control Function (I-CSCF)

An I-CSCF is a SIP server and located at the edge of an administrative domain. Its IP address is published in the Domain Name System (DNS) of the domain, so that remote servers can find it and use it as a forwarding point for SIP packets to this domain. It queries the HSS to retrieve the address of the S-CSCF and assign it to a user performing SIP registration and also forwards SIP requests or responses to the S-CSCF.

An IMS over Service Based Interface (SBI) architecture has recently been standardized by 3GPP. This replaces the legacy Cx and Sh interfaces in favor of SBI interfaces, such as Hypertext Transfer Protocol (HTTP)-based and cloud-native based interfaces.

In the IMS over SBI, which soon will be replacing Cx and Sh interfaces, several services have been defined. Two of them are listed below:
- User Equipment Context Management (UECM) -used to handle IMS registrations by a given S-CSCF.
- Subscription Data Management (SDM) - used to manage subscription data, such as S-CSCF selection information to be used by an I-CSCF.

SBI allows cloud-native applications to be micro-service based and as stateless as possible so that scalability and redundancy are much more efficient. SBI and Representational State Transfer (REST)-ful (RESTful) interfaces uses stateless interactions. This implies that the fewer states being required from the server, the more efficiency in terms of load balancing, failover, etc. is achieved.

### SUMMARY

As a part of developing embodiments herein a problem was identified by the inventors and will first be discussed.

### Legacy Cx S-CSCF re-selection

When a S-CSCF re-selection is needed, an I-CSCF requests S-CSCF selection assistance data from an HSS. At this occurrence, an S-CSCF reassignment pending flag, is set in the HSS. The flag is cleared when the HSS accepts the request to assign a new S-CSCF, and store its identity, to a UE, so that a new request from a different S-CSCF is rejected unless there is again a previous explicit request of the S-CSCF selection assistance data by the I-CSCF and the flag in HSS is set again.

If the legacy Cx S-CSCF re-selection procedure, in which an HSS is not allowed to store an S-CSCF identity if it is different from the one currently serving the UE, if the S-CSCF reassignment pending flag is not set, is used for IMS over SBI, the I-CSCF may not be able to perform S-CSCF re-selection. This may lead to disruptions in services and leave the UE unable to accept terminating communication sessions.

A problem is that the legacy Cx S-SCSF re-selection procedure may not be applied in IMS over SBI.

In IMS over SBI, it may not be possible to ensure that a request for S-CSCF selection assistance data is coming from an I-CSCF, since SBI is designed to be used by any network function and/or service consumer. Further, setting a flag in an HSS due to a simple reception of a request makes the procedure dependent on future events which may not take place, e.g. if no S-CSCF contacts the HSS after setting the flag. It is not described when the flag is reset in legacy Cx, other than when the HSS accepts an S-CSCF re-selection. SBI operations need to be independent from each other whenever is possible. They should not leave a temporary status in the server which may be permanent since it assumes that a request will come later and that the temporary status then will be cleared. This is breaking the RESTful and/or SBI principles of using stateless interactions. This means that calls and other sessions for UEs served by an S-CSCF, and if that S-CSCF fails, are simply rejected, leading to higher risk of failed sessions and a decreased performance of the communications network.

US 2010/217875 describes a method which comprises, in response to receipt of a Session Initiation Protocol (SIP) message, requesting capabilities information relating to a user from a Home Subscriber Server (HSS) of the IMS. On receipt of the capabilities information from the HSS, a primary and a secondary Serving Call/Session Control Function (S-CSCF) of the IMS are selected to provide services to the user. In one embodiment, the I-CSCF attempts to forward the SIP message to the primary S-CSCF with information relating to the secondary S-CSCF, such that the information can be provided subsequently to the HSS. If the attempt is determined to have failed, the SIP message can be forwarded to the secondary S-CSCF instead.

An object of embodiments herein is to improve the performance of a communications network comprising an IMS network.

The invention relates to a method performed by a first IMS node, as further defined in claim 1, a method performed by a second server, as further defined in claim 5, a method performed by a subscriber server, as further defined in claim 8, a first IMS node, as further defined in claim 12, a second server, as further defined in claim 13, and subscriber server , as further defined in claim 14, for reselecting a server for session control in a IMS network over SBI.

Thanks to that the first IMS node receives selection assistance data for selecting a second server for to be assigned to the UE for session control, and that the first IMS node after selecting the second server based on the selection assistance data, sends the indication indicating that the second server has been selected to be assigned to the UE to the second server, it is possible for the subscriber server to register the address of the second server to replace the first server in being assigned to the UE for the session control. This is performed by the second server sending a registration request to the subscriber server comprising the indication which permits the subscriber server to replace the first server with the selected second server to be assigned to UE for the session control. In this way an efficient mechanism improving the selection of a second server to assigned to the UE for session control is achieved, which results in a reduced risk of failed sessions and thereby an improved performance of the communications network comprising an IMS network.

Embodiments herein brings the advantage of achieving a high availability with minimal signaling for IMS over SBI, reducing risk of failed sessions and a reduced load in the load, e.g. in a RAN, an EPC, a 5GC and/or an IMS.

### BRIEF DESCRIPTION OF THE DRAWINGS

Examples of embodiments herein are described in more detail with reference to attached drawings in which:
- **Figure 1a**: is a schematic block diagram illustrating embodiments of a communications network.
- **Figure 1b**: is a schematic block diagram illustrating embodiments of an IMS network.
- **Figure 2**: is a flowchart depicting embodiments of a method in a first IMS node.
- **Figure 3**: is a flowchart depicting embodiments of a method in a second server.
- **Figure 4**: is a flowchart depicting embodiments of a method in a subscriber server.
- **Figure 5a**: is a sequence diagram depicting embodiments of a method.
- **Figure 5b**: is a sequence diagram depicting embodiments of a method.
- **Figure 6a-b**: are schematic block diagrams illustrating embodiments of a first IMS node.
- **Figure 7a-b**: are schematic block diagrams illustrating embodiments of a second server.
- **Figure 8a-b**: are schematic block diagrams illustrating embodiments of a subscriber server.
- **Figure 9**: schematically illustrates a telecommunication network connected via an intermediate network to a host computer.
- **Figure 10**: is a generalized block diagram of a host computer communicating via a base station with a user equipment over a partially wireless connection.
- **Figures 11-14**: are flowcharts illustrating methods implemented in a communication system including a host computer, a base station and a user equipment.

### DETAILED DESCRIPTION

Embodiments herein relate to a communications network and the handling of a setup of a session for communication with a UE assigned a first server for session control.

Example embodiments herein provides methods that improve the handling of a setup of a session for communication with a UE, by allowing a first IMS node to indicate in an invitation to a second server that the second server is selected to replace a first server in being assigned to the UE for session control. This allows the second server to send the indication to a subscriber server when requesting the subscriber server to register the address of the second server, to replace the first server in being assigned to the UE for the session control.

Further, example embodiments herein provides methods that improves the handling of a setup of a session for communication with a UE, by permitting the subscriber to register the address of the second server to replace the first server in being assigned to the UE for session control, by receiving the indication that indicates that the second server has been selected to replace the first server in being assigned to the UE. This results in a more efficient method for handling a setup of session for communication with the UE.

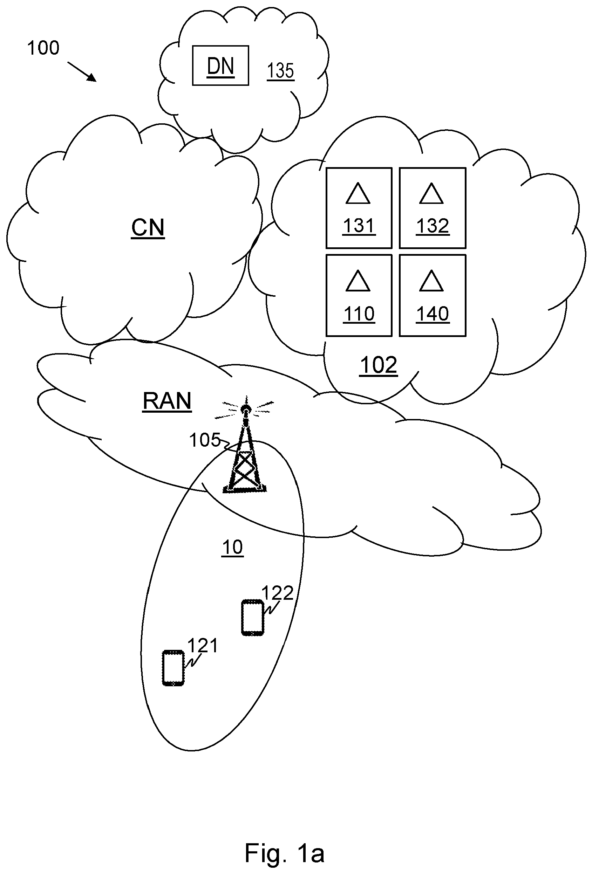

**Figure 1a** is a schematic overview depicting **a communications network 100** wherein embodiments herein may be implemented. The communications network 100 comprises one or more **RANs** and one or more **CNs.** The communications network 100 may use a number of different technologies, such as Wi-Fi, Long Term Evolution (LTE), LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

The communications network 100 further comprises an **Internet Protocol (IP) Multimedia Subsystem (IMS) network 102,** in which IMS network 102, a first IMS node 110, a first server 131, a second server and a subscriber server 140 operates. The IMS network 102 is an architecture for delivering media content over an IP packet switched transport.

A number of network nodes operate in the communications network 100 such as e.g. **a network node 105.** The network node 105 provides radio coverage in a number of cells which may also be referred to as a beam or a beam group of beams, such as a **cell 10** provided by the network node 105.

The network node 105 may be any of a NG-RAN node, a transmission and reception point e.g. a base station, a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a wireless device within the service area served by the network node 105 depending e.g. on the first radio access technology and terminology used. The network node 105 may be referred to as a serving network node and communicates with UEs such as a UE 121 and a UE 122, with Downlink (DL) transmissions to the UEs 121, 122 and in Uplink (UL) transmissions from the UEs 121, 122 .

One or more UEs operate in the communication network 100, such as e.g. the UE 121 and the UE 122. According to example scenarios herein, the UE 121 may be referred to as the calling UE 121, and the UE 122 may be referred to as the called UE 122. The UE 121 and the UE 122 may also referred to as devices, IoT devices, mobile stations, non-access points (non-AP) STAs, STAs, user equipments and/or a wireless terminals, Application Servers (AS), services, public numbers, communicating via one or more Access Networks (AN), e.g. the RAN, to one or more CNs. It should be understood by the skilled in the art that "wireless device" is a non-limiting term which means any terminal, wireless communication terminal, user equipment, Machine Type Communication (MTC) device, Device to Device (D2D) terminal, a radio device in a vehicle, or node e.g. smart phone, laptop, mobile phone, sensor, relay, mobile tablets or even a small base station communicating within a cell.

The **first IMS node 110** may be used for forwarding incoming IMS signalling to the UE 122 via intermediate nodes, such as e.g. the first server 131 and the second server 132 and may e.g. be an I-CSCF.

The **first server 131** and the **second server 132** may be used for performing session control service for the UE 122 and may e.g. be an S-CSCF.

The **subscriber server 140** may be used for handling subscriber data for the UE 122 and may e.g. be an HSS.

Methods herein may be performed by the first IMS node 110, first network node 131 and the subscriber server 140. As an alternative, a Distributed Node (DN) and functionality, e.g. comprised in a **cloud 135** as shown in Figure 1a, may be used for performing or partly performing the methods herein.

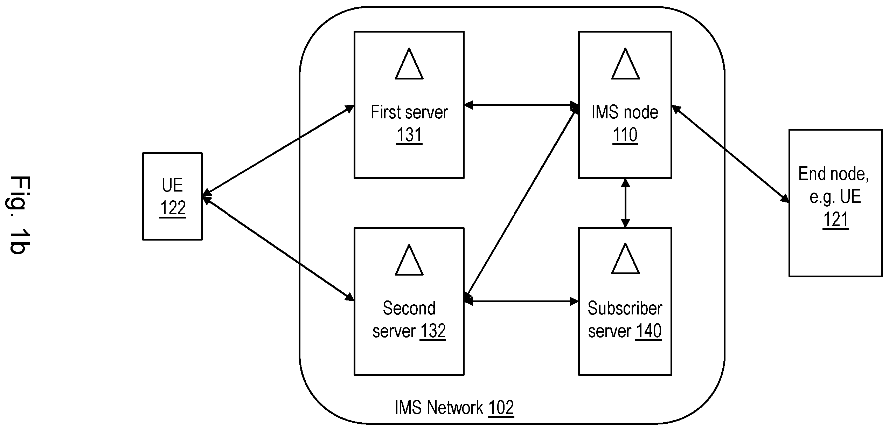

**Figure 1b** shows a schematic overview of the IMS network 102 according to an example scenario wherein embodiments herein may be applied. The IMS network 102 comprises one or more IMS nodes, such the first IMS node 110. The IMS network 102 further comprises the first server 131, the second server 132 and the subscriber server 140. The first IMS node 110 may communicate with the first server 131 and the second server 132, with the subscriber server 140, the end node e.g. the calling UE 121 and with the UE 122 through any one of the first server 131 and second server 132. SIP signals when setting up a session for communication between the UE 122 and e.g. an end node, pass through the first IMS node 110 and any one of the first server 131 and second server 132. If the first server 131, assigned to the UE 122 for session control, e.g. fails, becomes unavailable or returns an error message, another server, e.g. the second server 132, has to be selected, by the first IMS node 110, and assigned to the UE 122 for session control in order to setup the session for communication.

A number of embodiments will now be described, some of which may be seen as alternatives, while some may be used in combination.

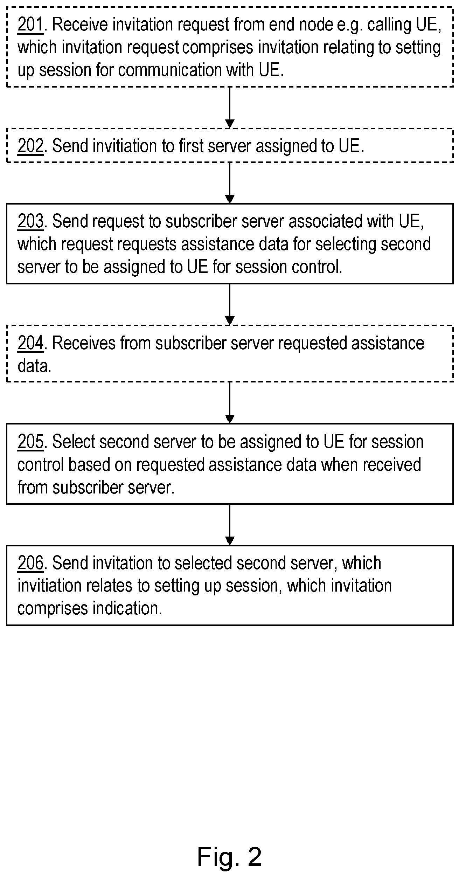

**Figure 2** shows example embodiments of a method performed by a first IMS node 110 for handling a setup of a session for communication with a UE 122 in a communications network 100. A session for communication may mean a multimedia session, a voice call, a video call or an SMS over IMS. To setup a session may mean to establish said e.g. multimedia session, a voice call, a video call or an SMS over IMS. To handling the setup may mean to trigger multimedia telephony applications. The UE 122 is assigned a first server 131 for session control of the session. Assigned to the UE 122 when used herein, may mean that the subscriber server 140 has registered e.g. the first server 131 for session control in the subscriber data of the UE 122. Session control of a session when used herein may mean to control services triggered by an Application Server (AS), e.g. control the duration of the session in order to avoid excessively long call durations.

Any one or more out of: The first IMS node 110 may be an I-CSCF node, the first server 131 may be an S-CSCF node, the second server may be an S-CSCF node, and the subscriber node 140 may be an HSS node.

The method comprises any one or more of the following actions, which actions may be taken in any suitable order. Actions that are optional are presented in dashed boxes in Figure 2.

### Action 201

In some embodiments, when a session for communication is setup with the UE 122, an invitation request may be sent from an end node, such as the calling UE 121, to the first IMS node 110.

In these embodiments, the first IMS node 110 may receive the invitation request from an end node e.g. a calling UE 121. The invitation request comprises an invitation relating to setting up the session for the communication with the UE 122. The invitation request may e.g. be a SIP INVITE request or a SIP MESSAGE request.

### Action 202

The first server 131 is assigned the UE 122 for session control . The first IMS node 110 may thus direct any incoming requests or other message sent to the called UE 122, to the server node currently assigned to the UE 122.

So, the first IMS node 110 may send the received invitation to the first server 131 assigned to the UE 122. The invitation may e.g. be a SIP INVITE request or a SIP MESSAGE request.

### Action 203

The first server node 131 may e.g. be unavailable or another server node may be better suited to handle the setup of the session with the UE 122. The first IMS node 110 then needs to select a new server node for the session control.

In order to select a suitable server node for session control of the UE 122, the first IMS node 110 needs selection assistance data.

The first IMS node 110 sends a request to a subscriber server 140 associated with the UE 122. The request requests assistance data for selecting a second server 132 to be assigned to the UE 122 for the session control. The selection assistance data may e.g. comprise data related to capabilities of the second server 132. The subscriber server may be an SBI capable subscriber server meaning that it supports the services required for IMS over SBI, such as e.g. nhss-ims-uecm, nhss-ims-sdm. The wording SBI capable when used herein, may mean that there is support for IMS over SBI using stateless transactions.

Depending on the interfaces used for communication between the first IMS node 131 and the subscriber server 140, different protocols may be used for the request.

In some embodiments, the request may e.g. be any one or more out of: A Hypertext Transport Protocol (HTTP) GET request and a Diameter request message. When the request is an HTTP GET request, the interface used may be an SBI interface. When the request is a Diameter request, the interface used may by a Cx interface.

As mentioned above, the first server node 131 may by some reason e.g. become unavailable or another server node may be better suited to handle the setup of the session with the UE 122.

The request may e.g. be sent when any one out of: The first IMS node 110 determines that the first server 131 is unavailable at setting up the session, or it is decided that the first server 131 is to be replaced at setting up the session. The reason for determining that the first server 131 is unavailable and to replace the first server 131 at setting up the session may e.g. comprise any one or more of: Load balancing between the first server 131, the second server 132 and any one or more third servers, the first server 131 is being taken offline, the first server 131 sends an error message to the IMS node 110, such as e.g. a SIP error message, in response to the invitation.

### Action 204

As mentioned above, the first IMS node 110 request assistance data for selecting the second server 132 to be assigned to the UE 122. In these embodiments, the first IMS node 110 e.g. receives the assistance data for selecting a second server 132 to be assigned to the UE 122 for the session control from the subscriber server 140.

### Action 205

The received assistance data assists the first IMS node 110 by make an appropriate basis for selecting the second server 132 to be assigned to the UE 122. For example, the assistance data may comprise an integer indicating that a server, e.g. the second server 132, is the preferred server. The assistance data may further comprise capabilities supported by a server, e.g. the second server 132. The first IMS node 110 may have stored a mapping between assistance data and servers that may be selected.

The first IMS node 110 selects the second server 132 to be assigned to the UE 122 for session control. The selection is thus based on the requested assistance data when received from the subscriber server 140.

### Action 206

When the first IMS node 110 has selected the second server 132 to be assigned to the UE 122 for session control, the first IMS node 110 sends the received invitation to the selected second server 132.

The first IMS node 110 sends an invitation to the selected second server 132. The invitation relates to the setting up the session.

The invitation comprises an indication indicating that the selected second server 132 is selected to replace the first server 131. The indication triggers the selected second server 132, to indicate to the subscriber server 140 to register the address of the selected second server 132 in the subscriber server 140, to replace the first server 131 in being assigned to the UE 122 for the session control.

The indication permits the subscriber server 140, to perform the registering to replace the first server 131 with the selected second server 132 to be assigned to the UE 122 for session control for said session. By sending the indication to the second server node 132, thereby permitting the subscriber server 140 to replace the first server 131 with the second server 132 in being assigned to the UE 122 for session control, a risk that the communication session fails is reduced, this with a minimal signaling. Minimal signaling means that the only signaling needed to replace the first server 131 with the second server 132 in being assigned to the UE 122 for session control, is the signaling needed to indicate to the subscriber server 140 that the selected second server 132 is selected to replace the first server 131.

In some embodiments, any one or more out of: the indication is comprised in a routing header of the invitation, and the invitation is a SIP request message. The invitation may further be a SIP INVITE request or a SIP MESSAGE request. When comprised in the routing header of the invitation, the indication may be a parameter, such as e.g. URI parameter, or a token or cookie in a URI. The indication may further be comprised in a header of the invitation different from the routing header.

The method will now be described from the view of the second server 132.

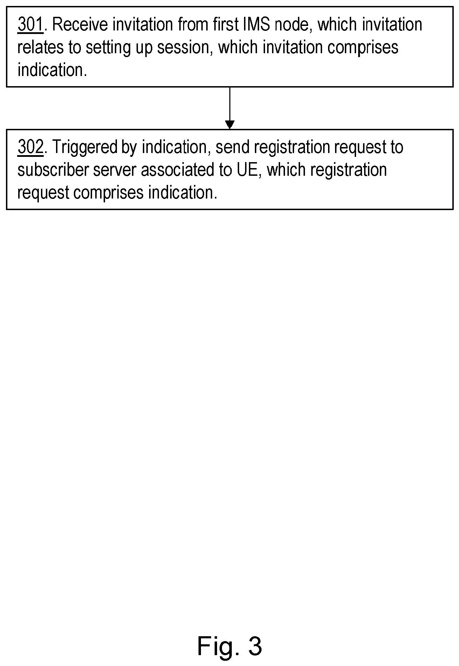

**Figure 3** shows example embodiments of a method performed by the second server 132 for handling a setup of a session for communication with the UE 122 in a communications network 100. The UE 122 is assigned the first server 131 for session control of the session. The first server 131 being assigned to the UE 122 when used herein, means that the subscriber server 140 has registered e.g. the first server 131 for session control in the subscriber data of the UE 122. Any one or more out of: The first IMS node 110 may be an I-CSCF node, the first server 131 may be an S-CSCF node, the second server may be an S-CSCF node, and the subscriber node 140 may be an HSS node.

The method comprises any one or more of the following actions, which actions may be taken in any suitable order. Actions that are optional are presented in dashed boxes in Figure 3.

### Action 301

As mentioned above, when the first IMS node 110 has selected the second server 132 to be assigned to the UE 122 for session control, the first IMS node 110 sends the received invitation to the selected second server 132.

The second server 132 receives the invitation from the first IMS node 110. The invitation relates to setting up the session. The invitation comprises the indication indicating that the second server 132 is selected to replace the first server 131 in being assigned to the UE 122 for session control.

In some embodiments, any one or more out of: The indication is comprised in a routing header of the invitation, and the invitation is a SIP request message. The invitation may further be e.g. a SIP INVITE request or a SIP MESSAGE request. When comprised in the routing header of the invitation, the indication may be a parameter, such as e.g. URI parameter, or a token or cookie in a URI. The indication may further be comprised in a header of the invitation different from the routing header.

As mentioned above, the first server node 131 may e.g. become unavailable or another server node may be better suited to handle the setup of the session with the UE 122. The first IMS node 110 then needs to select a new server node for session control.

In some embodiments, the invitation from the first IMS node 110 is received when any one out of: The first IMS node 110 determines that the first server 131 is unavailable at setting up the session, or it has been decided that the first server 131 is to be replaced at setting up the session. As mentioned above, the reason for determining that the first server 131 is unavailable and to replace the first server 131 at setting up the session may e.g. comprise any one or more of: Load balancing between the first server 131, the second server 132 and any one or more third servers, the first server 131 is being taken offline, the first server 131 sends an error message to the IMS node 110, such as e.g. a SIP error message, in response to the invitation the first IMS node 110 sent to the first server 131.

### Action 302

The second server 132 is selected for session control and needs to be assigned to UE 122 and properly be registered in the subscriber server 140 accordingly in order to a successful setup of the session for the communication with the UE 122.

According to embodiments herein, the second server 132 is triggered by the indication to sends a registration request to a subscriber server 140 associated with the UE 122. The registration request comprises the indication indicating that the second server 132 is selected to replace the first server 131 in being assigned to the UE 122 for session control. The registration request requests the subscriber server 140 to register the address of the selected second server 132 in the subscriber server 140, to replace the first server 131 in being assigned to the UE 122 for the session control. The indication permits the subscriber server 140, to perform the registering to replace the first server 131 with the selected second server 132 to be assigned to the UE 122 for session control for said session. The indication may e.g. be a parameter in the registration request. The parameter may e.g. be a Boolean type parameter, or an enumerated event.

When the indication is a Boolean type parameter, and set to TRUE, it may e.g. indicate that the first IMS node 140 has selected the second server 132 to replace the first server 131 in being assigned to the UE for session control or that a server re-selection has occurred. When set to FALSE, the parameter may e.g. indicate that no server re-selection has occurred. When the parameter is absent it may e.g. be an indication that no server re-selection has occurred. The server may e.g. be an S-CSCF.

Depending on the interfaces used for communication between the second server 132 and the subscriber server 140, different protocols may be used for the request.

In some embodiments, the registration request is any one or more out of: an HTTP PUT request, and a Diameter request message. When the registration request is an HTTP PUT request, the interface used may be an SBI interface. When the request is a Diameter request, the interface used may by a Cx interface.

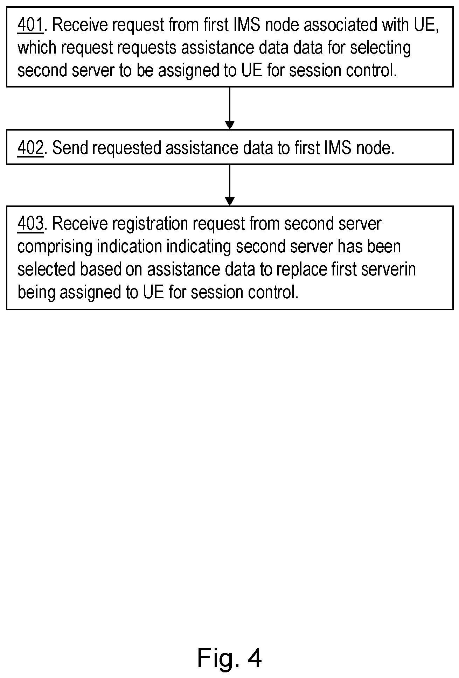

The method will now be described from the view of the subscriber server 140. **Figure 4** shows example embodiments of a method performed by the subscriber server 140 for handling a setup of a session for communication with a UE 122 in a communications network 100. The UE 122 is assigned a first server 131 for session control of the session. The subscriber server 140 is associated with the UE 122. Assigned to the UE 122 when used herein, means that the subscriber server 140 has registered e.g. the first server 131 for session control in the subscriber data of the UE 122. Any one or more out of: The first IMS node 110 may be an I-CSCF node, the first server 131 may be an S-CSCF node, the second server may be an S-CSCF node, and the subscriber node 140 may be an HSS node. Associated with the UE 122 when used herein, means that the subscriber server 140 stores, updates and handles the subscriber data for the UE 122.

The method comprises any one or more of the following actions, which actions may be taken in any suitable order. Actions that are optional are presented in dashed boxes in Figure 4.

### Action 401

When a new server for session control for the UE 122 is to be selected, the first IMS node 110 needs selection assistance data.

The subscriber server 140 receives a request from the first IMS node 110 associated with the UE 122. The request requests assistance data for selecting a second server 132, to be assigned to the UE 122 for the session control. The selection assistance data may e.g. comprise capabilities of the second server 132. The subscriber server may be an SBI capable subscriber server.

As mentioned above, depending on the interfaces used for communication between the first IMS node and the subscriber server 140, different protocols may be used for the request.

Therefore, in some embodiments, the request is any one or more out of: an HTTP GET request and a Diameter request message. When the request is an HTTP GET request, the interface used may be an SBI interface. When the request is a Diameter request, the interface used may by a Cx interface.

The request may be received when any one out of: The first IMS node 110 determines that the first server 131 is unavailable at setting up the session, or it is decided that the first server 131 is to be replaced at setting up the session. As mentioned above, deciding to replace the first server 131 at setting up the session may e.g. comprise any one or more of: Load balancing between the first server 131, the second server 132 and any one or more third servers, the first server 131 is being taken offline, the first server 131 sends an error message to the IMS node 110, such as e.g. a SIP error message, in response to the invitation the first IMS node 110 sent to the first server 131

### Action 402

The subscriber server 140 sends the requested assistance data to the first IMS node 110. This is e.g. as a response to the request for selection assistance data.

### Action 403

In order for the session for communication with the UE 122 to be setup using the selected second server 132, the selected second server 140 needs to be registered to be assigned to the UE 122 in the subscriber server 140.

The subscriber server 140 receives a registration request from the second server 132 comprising an indication indicating that the second server 132 has been selected based on the assistance data, to replace the first server 131 in being assigned to the UE 122 for session control. The registration request comprising the indication, requests and permits the subscriber server 140 to register the address of the selected second server 132 in the subscriber server 140, to replace the first server 131 in being assigned to the UE 122 for the session control. By sending the indication to the subscriber server 140, thereby permitting the subscriber server 140 to replace the first server 131 with the second server 132 in being assigned to the UE 122 for session control, the risk of failed communication session is reduced with minimal signaling. The indication may e.g. be a parameter in the registration request. The parameter may e.g. be a Boolean type parameter or an enumerated event.

When the indication is a Boolean type parameter, and set to TRUE, it may e.g. indicate that the first IMS node 140 has selected the second server 132 to replace the first server 131 in being assigned to the UE for session control or that a server re-selection has occurred. When set to FALSE, the parameter may e.g. indicate that no server re-selection has occurred. When the parameter is absent it may e.g. be an indication that no server re-selection has occurred. The server may e.g. be an S-CSCF.

As mentioned above, depending on the interfaces used for communication between the second server 132 and the subscriber server 140, different protocols may be used for the request.

Therefore, the registration request may be any one or more out of: An HTTP PUT request and a Diameter request message. When the registration request is an HTTP PUT request, the interface used may be an SBI interface. When the request is a Diameter request, the interface used may by a Cx interface.

### Action 404

The subscriber server 140 may note the presence of the indication in the received registration request before permitting itself to perform the requested registration.

Based on the registration request comprising the indication, the subscriber server 140 performs the registering to replace the first server 131 with the selected second server 132 to be assigned to the UE 122 for session control for said session. By receiving the indication from the second server node 132, the subscriber server 140 is permitted to replace the first server 131 with the second server 132 in being assigned to the UE 122 for session control, thereby reducing the risk of failed communication sessions with minimal signaling.

Embodiments herein such as mentioned above will now be further described and exemplified. The text below is applicable to and may be combined with any suitable embodiment described above.

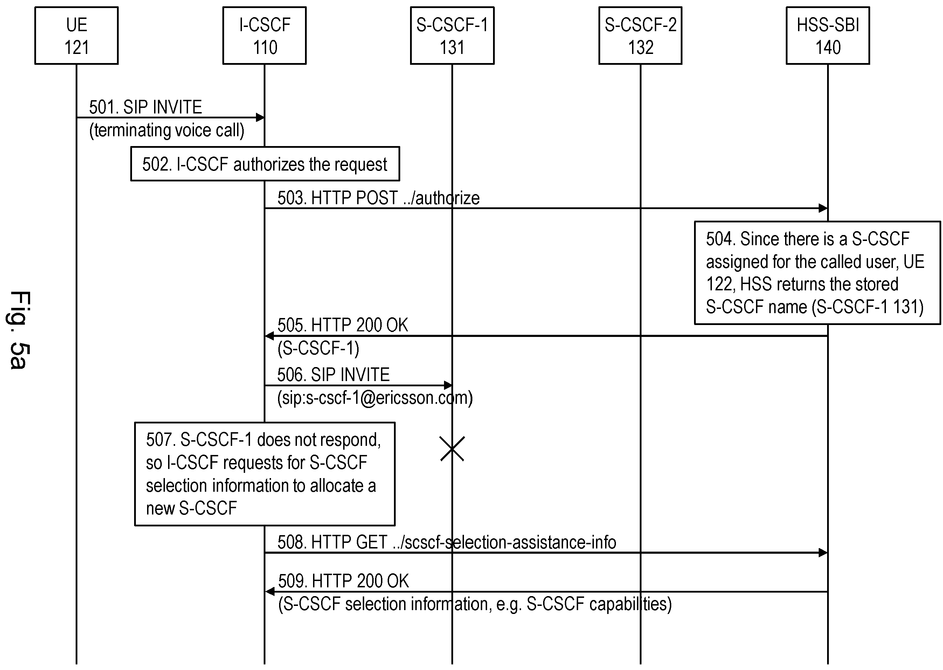

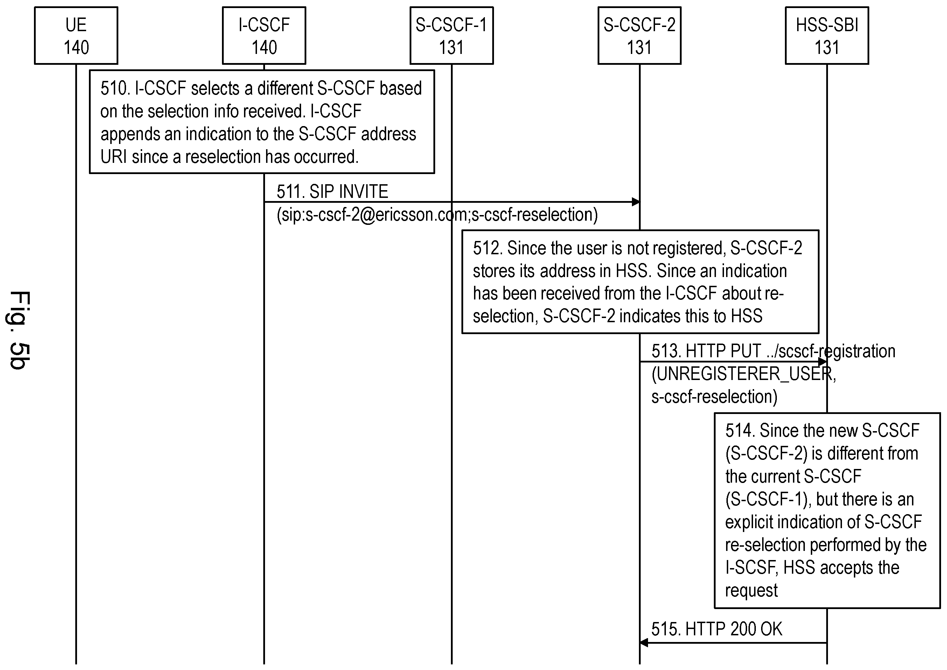

Actions 501-515 of **Figures 5a** **and b** depict detailed steps for an implementation example according to embodiments herein. In the Figure 5a and b the first IMS node 110 is referred to as I-CSCF 110, the first server 131 is referred to a S-CSCF-1 131, the second server 132 is referred to as S-SCSF-2-132, the subscriber server 140 is referred to as HSS-SBI 140, the end node, e.g. calling UE 121, is referred to as UE 121 and the UE 122 (not shown) is referred to as UE 122. The actions may be taken in any suitable order.

### Action 501

The I-CSCF 110, which may be the first IMS node 110, receives e.g. a SIP INVITE request, such as the invitation request, from the UE121, which may be the end node e.g. the calling UE 121. The invitation request may comprise an invitation, such as the invitation relating to setting up a session for communication with the UE 122.

### Action 502

The I-CSCF 110 authorizes the request.

### Action 503

The I-CSCF 110 sends message, such as an HTTP POST ../authorize request, the to the HSS-SBI 140, which may be the subscriber server 140.

### Action 504

The HSS-SBI 140 checks if there is an S-CSCF assigned to the UE 122, and returns the stored S-CSCF name S-CSCF-1 131, which may be the first server 131.

### Action 505

The HSS-SBI 140 sends an HTTP 200 OK message to the I-CSCF 110 accepting the authorization. The message comprises the S-CSCF, such as S-CSCF-1 131, currently assigned to the UE 122 for session control.

### Action 506

The I-CSCF 110 sends e.g. a SIP INVITE request, such as the invitation relating to setting up a session for communication with the UE 122, to the S-CSCF 131, since it is currently assigned to the UE 122.

### Action 507

The I-CSCF 110 determines that an S-CSCF re-selection is needed, in this example when the S-CSCF-1 131 does not respond to the e.g. SIP INVITE request, such as the invitation relating to setting up a session for communication with the UE 122.

### Action 508

The I-CSCF 110 sends request for S-CSCF selection assistance data to the HSS-SBI 140 e.g. an HTTP GET ../scscf-selection-assistance-info, such as the request requesting assistance data for selecting a second server 132 to be assigned to the UE 122 for the session control.

### Action 509

The HSS-SBI 140 responds to the I-CSCF 110 by sending a response e.g. a HTTP 200 OK message, such as the requested assistance data, comprising the S-CSCF selection assistance data. The S-CSCF selection assistance data may e.g. comprise S-CSCF capabilities.

### Action 510

The I-CSCF 110 selects a different S-CSCF e.g. the S-CSCF-2 132, which may be the second server 132, to be assigned to the UE 122 for session control. The selection is based on the S-CSCF selection assistance data.

### Action 511

After selecting the S-CSCF-2 132 to be assigned to the UE 122 for session control, the I-CSCF 110 sends e.g. a SIP INVITE request, such as the invitation relating to setting up a session for communication with the UE 122, to the S-CSCF-2 132. The e.g. SIP INVITE request comprises an indication, such as the indication indicating that the S-CSCF-2 132 is selected to replace the S-CSCF-1 131 in being assigned to the UE 122 for session control, that an S-CSCF re-selection has occurred. This may be done in the form of a new URI parameter in a SIP route header included in the e.g. SIP INVITE request, such as e.g.:
*uri-parameter = transport-param* / *user-param* / *method-param* / *ttl-param* / *maddr-param* / *Ir-param* / *orig* / *other-param*
*orig = "orig"*
*reselect = "reselect"*

### Action 512

Since the S-CSCF-2 132 is not assigned to UE 122 for session control and triggered by the indication, the S-CSCF-2 132 stores its address in the HSS-SBI 140, thereby replacing the S-CSCF-1 131 as being assigned to the UE 122.

### Action 513

The S-CSCF-2 132 sends a registration request to the HSS-SBI 140 e.g. an HTTP PUT ../scscf-registration request, such as the registration request requesting the HSS-SBI 140 to register the address of the S-CSCF-2 132 in the S-CSCF-2 132, to replace the S-CSCF-1 131 in being assigned to the UE 122 for the session control. The registration request comprises the indication, such as the indication indicating that the S-CSCF-2 132 is selected to replace the S-CSCF-1 131 in being assigned to the UE 122 for session control, that an S-CSCF re-selection has occurred, such as e.g.:

| *Attribute name* | *Data type* | *P* | *Cardinality* | *Description* | *Applicability* |
|---|---|---|---|---|---|
| *imsRegistration Type* | *ImsRegistration Type* | *M* | 1 | *Contains the type of the registration*/*deregistration requested.* | |
| *impi* | *Impi* | *C* | *1* | *Contains an IMS Private Identity.* | |
| | | | | *It may be absent during the originating or terminating request to an unregistered Public Identity (imsRegistrationType shall contain the value UNREGISTERED_USER)* | |
| *cscfServerName* | *String* | *M* | *1* | *Contains the S-CSCF name in SIP URI format.* | |
| *scscfReselectin d* | *boolean* | *O* | *0..1* | *Indicates whether the I-CSCF has re-selected a S-CSCF due to the old S-CSCF not available* | |
| | | | | *true: S-CSCF reselection has occurred* | |
| | | | | *false or absent: S-CSCF reselection has not occurred and cscfServerName should be the one currently stored.* | |

### Action 514

The registration request requests the HSS-SBI 140 to register the address of the S-CSCF-2 132 in the HSS-SBI 140. Based on the registration request, to replace the S-CSCF-1 131 in being assigned to the UE 122 for the session control, the HSS-SBI 140 assigns, such as performs the registration of, the S-CSCF-2 132 to the UE 122 for session control, thereby replacing the S-CSCF-1 131 with the S-CSCF-2 132. The registration request comprises the indication, such as the indication indicating that the S-CSCF-2 132 is selected to replace the S-CSCF-1 131 in being assigned to the UE 122 for session control. The indication permits the HSS-SBI 140 to register the address of the selected S-CSCF-2 132 in the HSS-SBI 140, to replace the S-CSCF-1 131 in being assigned to the UE 122 for the session control.

### Action 515

After performing the registration, the HSS-SBI 140 may send a message, e.g. an HTTP 200 OK, to the S-CSCF-2 132 in order to acknowledge to the registration of the S-CSCF-2 132 in the HSS-SBI 140, to replace the S-CSCF-1 131 in being assigned to the UE 122 for the session control.

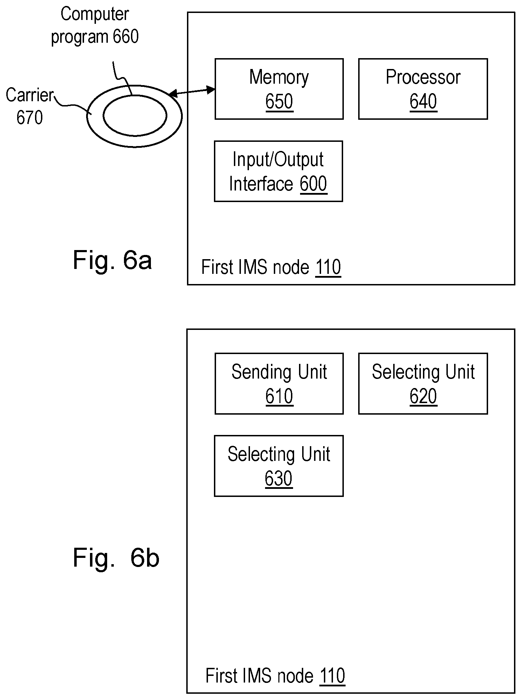

To perform the method actions above, the first IMS node 110 may comprise an arrangement depicted in **Figures 6a** **and b.** The first IMS node 110 is configured to handle a setup of a session for communication with a User Equipment, UE, 122 in a communications network 100. The UE 122 is adapted to be assigned a first server 131 for session control of the session.

The first IMS node 110 may comprise an input and output interface 600 configured to communicate with network nodes such as the first server 131, the second server 132, the subscriber server 140 and the UE 122. The input and output interface may comprise a wireless receiver (not shown) and a wireless transmitter (not shown).

The first IMS node 110 is further configured to, e.g. by means of a **sending unit 610** in the first IMS node 110, send a request to a subscriber server 140 adapted to be associated with the UE 122. The request is adapted to request assistance data for selecting a second server 132, to be assigned to the UE 122 for the session control,

The request may further be adapted to be any one or more out of: An HTTP GET request, and a SIP request message.

The request may further be adapted to be sent when any one out of: The first IMS node 110 determines that the first server 131 is unavailable at setting up the session, or it is decided that the first server 131 is to be replaced at setting up the session.

The first IMS node 110 is further configured to, e.g. by means of the sending unit 610 in the first IMS node 110, send an invitation to the selected second server 132. The invitation is adapted to be related to the setting up the session. The invitation is further adapted to comprise an indication adapted to indicate that the selected second server 132 is selected to replace the first server 131. The indication is further adapted to trigger the selected second server 132, to indicate to the subscriber server 140 to register the address of the selected second server 132 in the subscriber server 140, to replace the first server 131 in being assigned to the UE 122 for the session control. The indication is further adapted to permit the subscriber server 140, to perform the registering to replace the first server 131 with the selected second server 132 to be assigned to the UE 122 for session control for said session.

Any one or more out of: The indication may further be adapted to be comprised in a routing header of the invitation, and the invitation may further be adapted to be a SIP request message.

The first IMS node 110 may further be configured to, e.g. by means of the sending unit 610 in the first IMS node 110, send the invitation, to the first server 131 adapted to be assigned to the UE 122.

The first IMS node 110 is further configured to, e.g. by means of a **selecting unit 620** in the first IMS node 110, select a second server 132 to be assigned to the UE 122 for session control, based on the requested assistance data when received from the subscriber server 140.

The first IMS node 110 may further be configured to, e.g. by means of a **receiving unit 630** in the first IMS node 110, receive an invitation request, from an end node e.g. a calling UE 121. The invitation request is adapted to comprise the invitation relating to setting up the session for the communication with the UE 122.

The embodiments herein may be implemented through a respective processor or one or more processors, such as the **processor 640** of a processing circuitry in the first IMS node 110 depicted in Figure 6a, together with respective computer program code for performing the functions and actions of the embodiments herein. The program code mentioned above may also be provided as a computer program product, for instance in the form of a data carrier carrying computer program code for performing the embodiments herein when being loaded into the first IMS node 110. One such carrier may be in the form of a CD ROM disc. It is however feasible with other data carriers such as a memory stick. The computer program code may furthermore be provided as pure program code on a server and downloaded to the first IMS node 110.

The first IMS node 110 may further comprise a **memory 650** comprising one or more memory units. The memory 650 comprises instructions executable by the processor 640 in the first IMS node 110. The memory 650 is arranged to be used to store e.g. information, messages, indications, requests, selection data, communication data and applications to perform the methods herein when being executed in the first IMS node 110.

In some embodiments, a **computer program 660** comprises instructions, which when executed by the respective at least one processor 640, cause the at least one processor 640 of the first IMS node 110 to perform the actions above.

In some embodiments, a respective **carrier 670** comprises the respective computer program 660, wherein the carrier 670 is one of an electronic signal, an optical signal, an electromagnetic signal, a magnetic signal, an electric signal, a radio signal, a microwave signal, or a computer-readable storage medium.

Those skilled in the art will appreciate that the units in the first IMS node 110 described above may refer to a combination of analog and digital circuits, and/or one or more processors configured with software and/or firmware, e.g. stored in the first IMS node 110, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

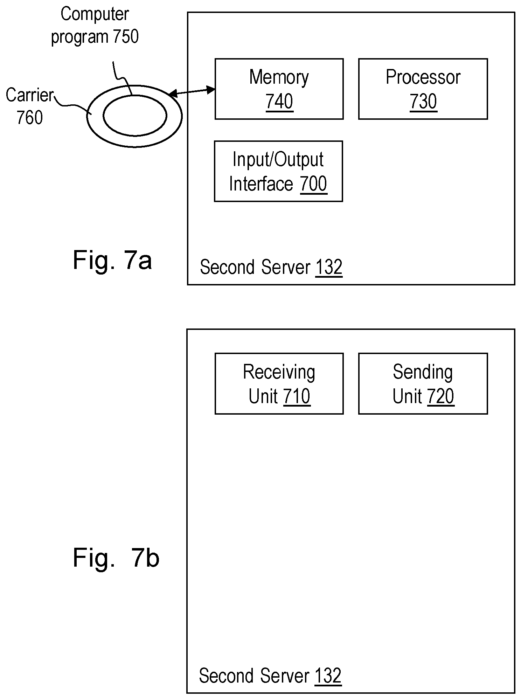

To perform the method actions above, the second server 132 may comprise an arrangement depicted in **Figures 7a** **and b.** The second server 132 is configured to handle a setup of a session for communication with a UE 122 in a communications network 100. The UE 122 is adapted to be assigned a first server 131 for session control of the session.

The second server 132 may comprise an input and output interface 700 configured to communicate with network nodes such as the first IMS node 110, the first server 131, the subscriber server 140 and the UE 122. The input and output interface may comprise a wireless receiver (not shown) and a wireless transmitter (not shown).

The second server 132 is further configured to, e.g. means of a **receiving unit 710** in the second server 132, receive an invitation from a first IMS node 110. The invitation is adapted to be related to setting up the session. The invitation is further adapted to comprise an indication indicating that the second server 132 is selected to replace the first server 131 in being assigned to the UE 122 for session control.

Any one or more out of: The indication may further be adapted to be comprised in a routing header of the invitation, and the invitation may further be adapted to be a SIP request message.

The invitation from the first IMS node 110 may further be adapted to be received when any one out of: The first IMS node 110 determines that the first server 131 is unavailable at setting up the session, or it has been decided that the first server 131 is to be replaced at setting up the session.

The second server 132 is further configured to, e.g. means of a **sending unit 720** in the second server 132, triggered by the indication, send a registration request to a subscriber server 140 adapted to be associated with the UE 122. The registration request is adapted to comprises the indication. The registration request is further adapted to request the subscriber server 140 to register the address of the selected second server 132 in the subscriber server 140, to replace the first server 131 in being assigned to the UE 122 for the session control. The indication is adapted to permit the subscriber server 140, to perform the registering to replace the first server 131 with the selected second server 132 to be assigned to the UE 122 for session control for said session.

The registration request may further be adapted to be any one or more out of: An HTTP PUT request, and a SIP request message.

The embodiments herein may be implemented through a respective processor or one or more processors, such as the **processor 730** of a processing circuitry in the second server 132 depicted in Figure 7a, together with respective computer program code for performing the functions and actions of the embodiments herein. The program code mentioned above may also be provided as a computer program product, for instance in the form of a data carrier carrying computer program code for performing the embodiments herein when being loaded into the second server 132. One such carrier may be in the form of a CD ROM disc. It is however feasible with other data carriers such as a memory stick. The computer program code may furthermore be provided as pure program code on a server and downloaded to the second server 132.

The second server 132 may further comprise a **memory 740** comprising one or more memory units. The memory 740 comprises instructions executable by the processor 730 in the second server 132. The memory 740 is arranged to be used to store e.g. information, messages, indications, requests, selection data, communication data and applications to perform the methods herein when being executed in the second server 132.

In some embodiments, a **computer program 750** comprises instructions, which when executed by the respective at least one processor 730, cause the at least one processor 730 of the second server 132 to perform the actions above.

In some embodiments, a respective **carrier 760** comprises the respective computer program 750, wherein the carrier 760 is one of an electronic signal, an optical signal, an electromagnetic signal, a magnetic signal, an electric signal, a radio signal, a microwave signal, or a computer-readable storage medium.

Those skilled in the art will appreciate that the units in the second server 132 described above may refer to a combination of analog and digital circuits, and/or one or more processors configured with software and/or firmware, e.g. stored in the second server 132, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

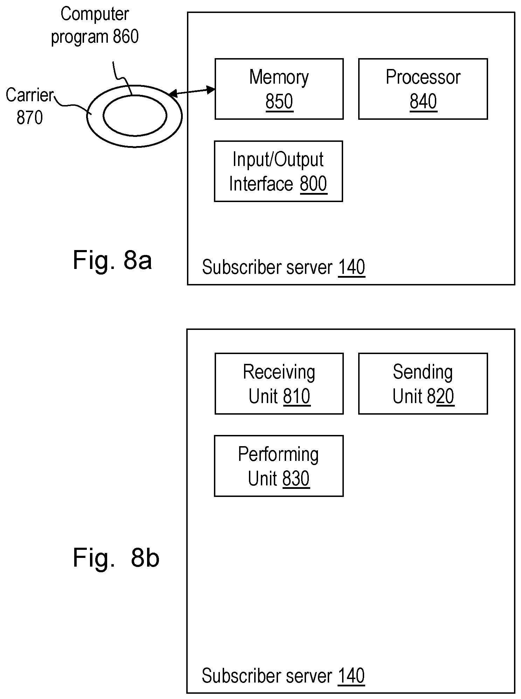

To perform the method actions above, the subscriber server 140 may comprise an arrangement depicted in **Figures 8a** **and b.** The subscriber server 140 configured to handle a setup of a session for communication with a UE 122 in a communications network 100. The UE 122 is adapted to be assigned a first server 131 for session control of the session, and the subscriber server 140 is adapted to be associated with the UE 122.

The subscriber server 140 may comprise an input and output interface 800 configured to communicate with network nodes such as the first IMS node 110, the first server 131 and the second server 132. The input and output interface may comprise a wireless receiver (not shown) and a wireless transmitter (not shown).

The subscriber server 140 is further configured to, e.g. means of a **receiving unit 810** in the subscriber server 140, receive a request from a first IMS node 110 adapted to be associated with the UE 122. The request is adapted to request assistance data for selecting a second server 132, to be assigned to the UE 122 for the session control.

The request may further be adapted to be any one or more out of: An HTTP GET request, and a SIP request message.

The request may further be adapted to be received when any one out of: The first IMS node 110 determines that the first server 131 is unavailable at setting up the session, or it is decided that the first server 131 is to be replaced at setting up the session.

The subscriber server 140 is further configured to, e.g. means of the **receiving unit 810** in the subscriber server 140, receive a registration request from the second server 132. The registration request is adapted to comprise an indication that the second server 132 has been selected based on the assistance data, to replace the first server 131 in being assigned to the UE 122 for session control. The registration request comprising the indication is further adapted to request and permit the subscriber server 140 to register the address of the selected second server 132 in the subscriber server 140, to replace the first server 131 in being assigned to the UE 122 for the session control.

The registration request may further be adapted to be any one or more out of: An HTTP PUT request, and a SIP request message.

The subscriber server 140 is further configured to, e.g. means of a **sending unit 820** in the subscriber server 140, send the requested assistance data to the first IMS node 110.

The subscriber server 140 is further configured to, e.g. means of a **performing unit 830** in the subscriber server 140, based on the registration request comprising the indication, perform the registering to replace the first server 131 with the selected second server 132 to be assigned to the UE 122 for session control for said session.

The embodiments herein may be implemented through a respective processor or one or more processors, such as the **processor 840** of a processing circuitry in the subscriber server 140 depicted in Figure 8a, together with respective computer program code for performing the functions and actions of the embodiments herein. The program code mentioned above may also be provided as a computer program product, for instance in the form of a data carrier carrying computer program code for performing the embodiments herein when being loaded into the subscriber server 140. One such carrier may be in the form of a CD ROM disc. It is however feasible with other data carriers such as a memory stick. The computer program code may furthermore be provided as pure program code on a server and downloaded to the subscriber server 140.

The subscriber server 140 may further comprise a **memory 850** comprising one or more memory units. The memory 850 comprises instructions executable by the processor 840 in the first subscriber server 140. The memory 850 is arranged to be used to store e.g. information, messages, indications, requests, selection data, communication data and applications to perform the methods herein when being executed in the subscriber server 140.

In some embodiments, a **computer program 860** comprises instructions, which when executed by the respective at least one processor 840, cause the at least one processor 840 of the subscriber server 140 to perform the actions above.

In some embodiments, a respective **carrier 870** comprises the respective computer program 860, wherein the carrier 870 is one of an electronic signal, an optical signal, an electromagnetic signal, a magnetic signal, an electric signal, a radio signal, a microwave signal, or a computer-readable storage medium.

Those skilled in the art will appreciate that the units in the first subscriber server 140 described above may refer to a combination of analog and digital circuits, and/or one or more processors configured with software and/or firmware, e.g. stored in the subscriber server 140, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

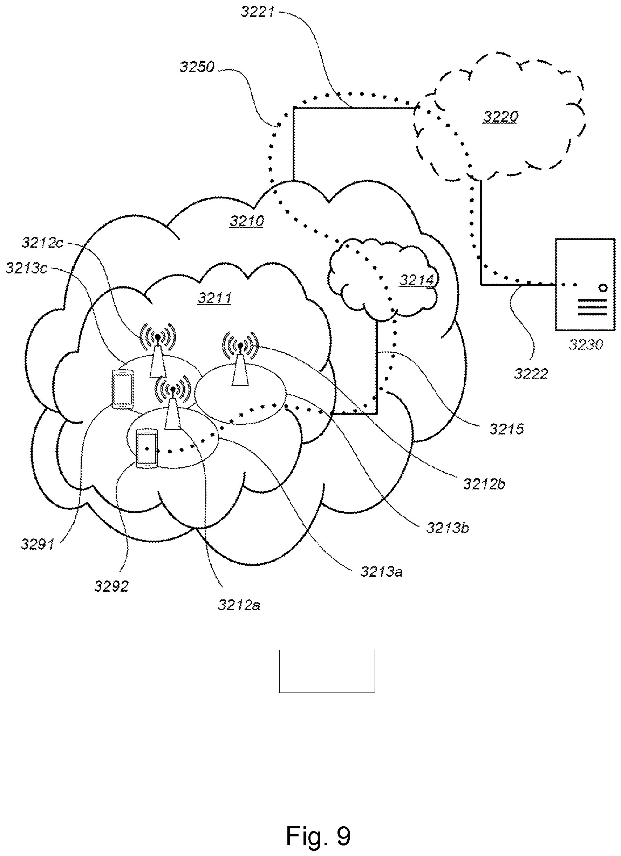

With reference to **Figure 9****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) such as the first UE 121 and/or a Non-AP STA 3291 located in coverage area 3213c is configured to wirelessly connect to, or be paged by, the corresponding base station 3212c. A second UE 3292 such as the second UE 122 and/or a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 9 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

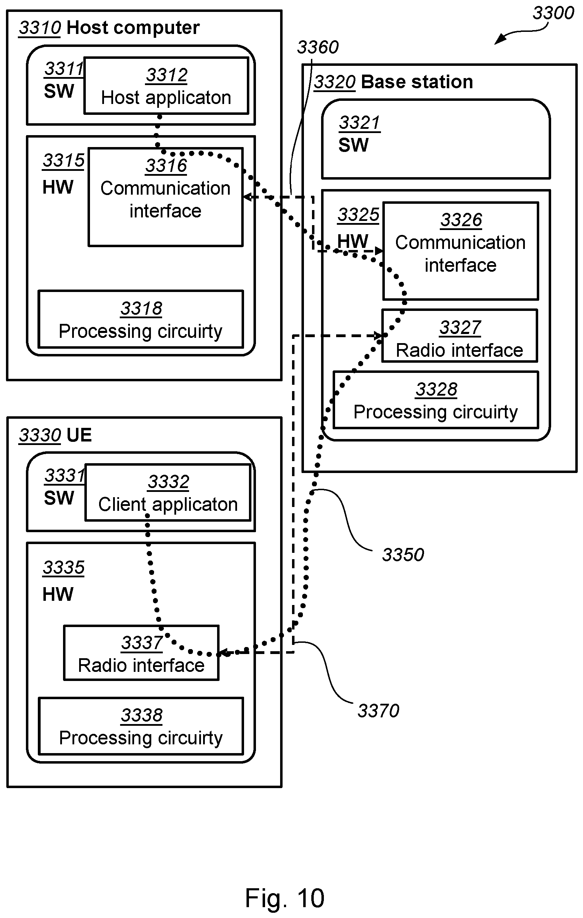

Example implementations, in accordance with an embodiment, of the UE, base station and host computer discussed in the preceding paragraphs will now be described with reference to **Figure 10****.** In a communication system 3300, a host computer 3310 comprises hardware 3315 including a communication interface 3316 configured to setup and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 10) served by the base station 3320. The communication interface 3326 may be configured to facilitate a connection 3360 to the host computer 3310. The connection 3360 may be direct or it may pass through a core network (not shown in Figure 10) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to setup and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 10 may be identical to the host computer 3230, one of the base stations 3212a, 3212b, 3212c and one of the UEs 3291, 3292 of Figure 9, respectively. This is to say, the inner workings of these entities may be as shown in Figure 10 and independently, the surrounding network topology may be that of Figure 9.

In Figure 10, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the [select the applicable **RAN** effect: data rate, latency, power consumption] and thereby provide benefits such as [select the applicable corresponding effect on the **OTT service:** reduced user waiting time, relaxed restriction on file size, better responsiveness, extended battery lifetime].

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

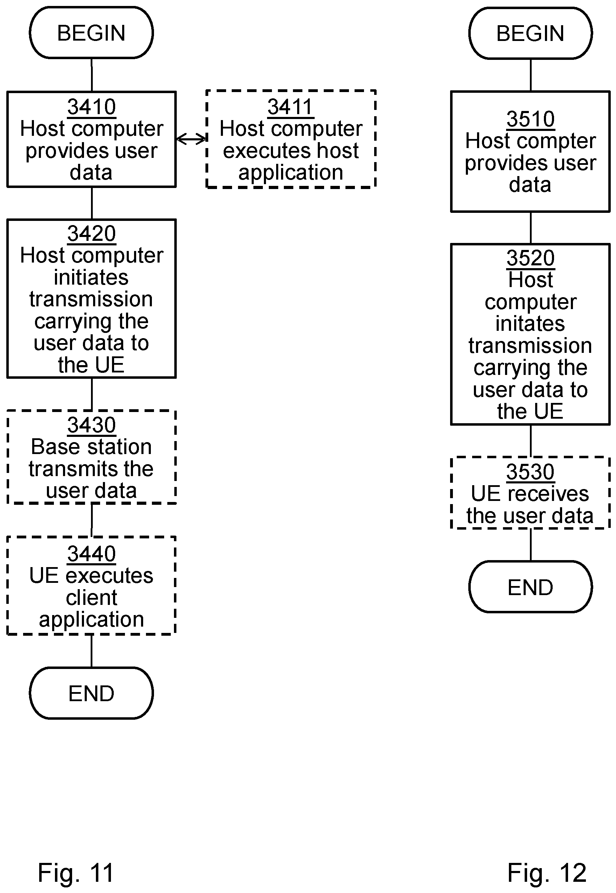

**Figure 11** is a flowchart illustrating a method implemented in a communication system, in accordance with one embodiment. The communication system includes a host computer, a base station such as a AP STA, and a UE such as a Non-AP STA which may be those described with reference to Figure 9 and Figure 10. For simplicity of the present disclosure, only drawing references to Figure 11 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Figure 12** is a flowchart illustrating a method implemented in a communication system, in accordance with one embodiment. The communication system includes a host computer, a base station such as a AP STA, and a UE such as a Non-AP STA which may be those described with reference to Figure 9 and Figure 10. For simplicity of the present disclosure, only drawing references to Figure 12 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

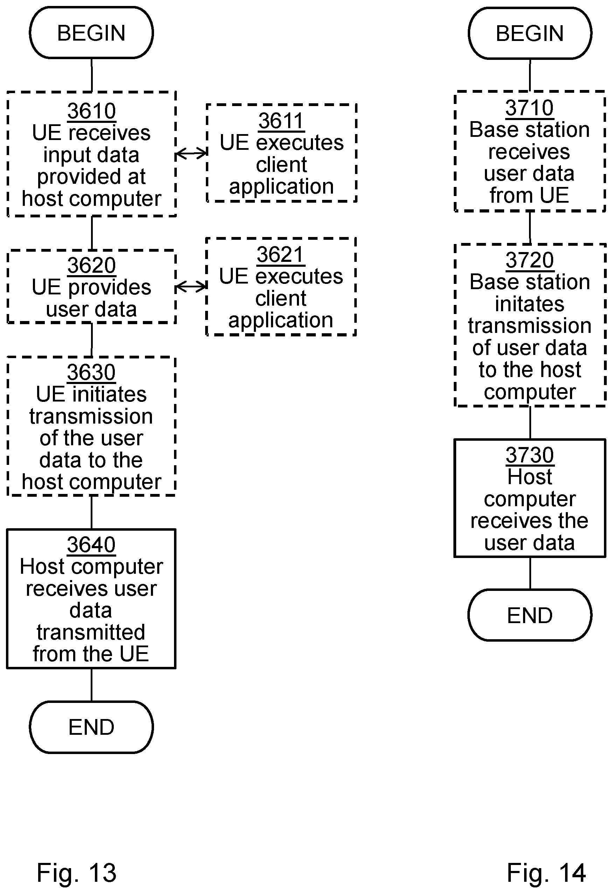

**Figure 13** is a flowchart illustrating a method implemented in a communication system, in accordance with one embodiment. The communication system includes a host computer, a base station such as a AP STA, and a UE such as a Non-AP STA which may be those described with reference to Figure 9 and Figure 10. For simplicity of the present disclosure, only drawing references to Figure 13 will be included in this section. In an optional first step 3610 of the method, the UE receives input data provided by the host computer. Additionally, or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Figure 14** is a flowchart illustrating a method implemented in a communication system, in accordance with one embodiment. The communication system includes a host computer, a base station such as an AP STA, and a UE such as a Non-AP STA which may be those described with reference to Figure 9 and Figure 10. For simplicity of the present disclosure, only drawing references to Figure 14 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

When using the word "comprise" or "comprising" it shall be interpreted as non-limiting, i.e. meaning "consist at least of".

The invention is defined by the appended claims.

## Claims

1. A method performed by a first Internet Protocol Multimedia Subsystem, IMS, node (110) for handling a setup of a session for communication with a User Equipment, UE, (122) in a communications network (100), wherein the UE (122) is assigned a first server (131) for session control of the session, the method comprising:
*sending* (203), when determining that the first server (131) is unavailable at setting up the session, or when deciding that the first server (131) is to be replaced at setting up the session, a request to a subscriber server (140) associated with the UE (122), which request requests assistance data for selecting a second server (132), to be assigned to the UE (122) for the session control,
*selecting* (205) a second server (132) to be assigned to the UE (122) for session control, based on the requested assistance data when received from the subscriber server (140),
*sending* (206) an invitation to the selected second server (132), which invitation relates to the setting up the session, which invitation comprises an indication that reselection has occurred and that the selected second server (132) is selected to replace the first server (131) in being assigned to the UE (122) for session control, and
which indication triggers the selected second server (132), to indicate to the subscriber server (140) to register the address of the selected second server (132) in the subscriber server (140), to replace the first server (131) in being assigned to the UE (122) for the session control,
wherein the indication permits the subscriber server (140), to perform the registering to replace the first server (131) with the selected second server (132) to be assigned to the UE (122) for session control for said session.

2. The method according to claim 1, wherein any one or more out of:
the indication is comprised in a routing header of the invitation, and
the invitation is a Session Initiation Protocol, SIP, request message.

3. The method according to any of claims 1-2, wherein the request is any one or more out of:
an Hypertext Transport Protocol, HTTP, GET request, and
a Diameter request message.

4. The method according to any of claims 1-3, further comprising:
*receiving* (201) an invitation request, from an end node e.g. a calling UE (121), which invitation request comprises the invitation relating to setting up the session for the communication with the UE (122), and
*sending* (202) the invitation to the first server (131) assigned to the UE (122).

5. A method performed by a second server (132) for handling a setup of a session for communication with a User Equipment, UE, (122) in a communications network (100), wherein the UE (122) is assigned a first server (131) for session control of the session, the method comprising:
*receiving* (301) an invitation from a first IMS node (110), which invitation relates to setting up the session, which invitation comprises an indication that reselection has occurred and indicating that the second server (132) is selected to replace the first server (131) in being assigned to the UE (122) for session control, and
triggered by the indication, *sending* (302) a registration request to a subscriber server (140) associated with the UE (122), which registration request comprises the indication that reselection has occurred, and
which registration request requests the subscriber server (140) to register the address of the selected second server (132) in the subscriber server (140), to replace the first server (131) in being assigned to the UE (122) for the session control,
wherein the indication permits the subscriber server (140), to perform the registering to replace the first server (131) with the selected second server (132) to be assigned to the UE (122) for session control for said session.

6. The method according to claim 5, wherein any one or more out of:.
the indication is comprised in a routing header of the invitation, and
the invitation is a Session Initiation Protocol, SIP, request message.

7. The method according to any of claims 5-6, wherein the registration request is any one or more out of:
an Hypertext Transport Protocol ,HTTP, PUT request, and
a Diameter request message.

8. A method performed by a subscriber server (140) for handling a setup of a session for communication with a User Equipment, UE, (122) in a communications network (100), wherein the UE (122) is assigned a first server (131) for session control of the session, and wherein the subscriber server (140) is associated with the UE (122), the method comprising:
*receiving* (401) a request from a first IMS node (110) associated with the UE (122), which request requests assistance data for selecting a second server (132), to be assigned to the UE (122) for the session control,
*sending* (402) the requested assistance data to the first IMS node (110),
*receiving* (403) a registration request from the second server (132) comprising an indication that reselection has occurred and indicating that the second server (132) has been selected based on the assistance data, to replace the first server (131) in being assigned to the UE (122) for session control, the registration request comprising the indication, requests and permits the subscriber server (140) to register the address of the selected second server (132) in the subscriber server (140), to replace the first server (131) in being assigned to the UE (122) for the session control,
based on the registration request comprising the indication, *performing* (404) the registering to replace the first server (131) with the selected second server (132) to be assigned to the UE (122) for session control for said session.

9. The method according to claim 8, wherein the registration request is any one or more out of:
an Hypertext Transport Protocol, HTTP, PUT request, and
a Diameter request message.

10. The method according to any of claims 8-9, wherein the request is any one or more out of:
an HTTP GET request, and
a Diameter request message.

11. The method according to any of claims 8-10, wherein the request is received when any one out of:
- the first IMS node (110) determines that the first server (131) is unavailable at setting up the session, or
- it is decided that the first server (131) is to be replaced at setting up the session.

12. A first Internet Protocol Multimedia System, IMS, node (110) configured to handle a setup of a session for communication with a User Equipment, UE, (122) in a communications network (100), wherein the UE (122) is adapted to be assigned a first server (131) for session control of the session, wherein the first IMS node (110) further is configured to:
*send,* when determining that the first server (131) is unavailable at setting up the session, or when deciding that the first server (131) is to be replaced at setting up the session, a request to a subscriber server (140) adapted to be associated with the UE (122), which request is adapted to request assistance data for selecting a second server (132), to be assigned to the UE (122) for the session control, ,
*select* a second server (132) to be assigned to the UE (122) for session control, based on the requested assistance data when received from the subscriber server (140),
*send* an invitation to the selected second server (132), which invitation is adapted to be related to the setting up the session, which invitation is further adapted to comprise an indication adapted to indicate that reselection has occurred and that the selected second server (132) is selected to replace the first server (131) in being assigned to the UE (122) for session control, and
which indication is further adapted to trigger the selected second server (132), to indicate to the subscriber server (140) to register the address of the selected second server (132) in the subscriber server (140), to replace the first server (131) in being assigned to the UE (122) for the session control,
wherein the indication is further adapted to permit the subscriber server (140), to perform the registering to replace the first server (131) with the selected second server (132) to be assigned to the UE (122) for session control for said session.

13. A second server (132) configured to handle a setup of a session for communication with a User Equipment, UE, (122) in a communications network (100), wherein the UE (122) is adapted to be assigned a first server (131) for session control of the session, wherein the second server (132) further is configured to:
*receive* an invitation from a first IMS node (110), which invitation is adapted to be related to setting up the session, and which invitation is further adapted to comprise an indication that reselection has occurred and indicating that the second server (132) is selected to replace the first server (131) in being assigned to the UE (122) for session control, and
triggered by the indication, *send* a registration request to a subscriber server (140) adapted to be associated with the UE (122), which registration request is adapted to comprises the indication that reselection has occurred, and
which registration request is further adapted to request the subscriber server (140) to register the address of the selected second server (132) in the subscriber server (140), to replace the first server (131) in being assigned to the UE (122) for the session control,
wherein the indication is adapted to permit the subscriber server (140), to perform the registering to replace the first server (131) with the selected second server (132) to be assigned to the UE (122) for session control for said session.

14. A subscriber server (140) configured to handle a setup of a session for communication with a User Equipment, UE, (122) in a communications network (100), wherein the UE (122) is adapted to be assigned a first server (131) for session control of the session, and wherein the subscriber server (140) is adapted to be associated with the UE (122), wherein the subscriber server (140) further is configured to:
*receive* a request from a first IMS node (110) adapted to be associated with the UE (122), which request is adapted to request assistance data for selecting a second server (132), to be assigned to the UE (122) for the session control,
*send* the requested assistance data to the first IMS node (110),
*receive* a registration request from the second server (132) adapted to comprise an indication that reselection has occurred and that the second server (132) has been selected based on the assistance data, to replace the first server (131) in being assigned to the UE (122) for session control, the registration request comprising the indication is further adapted to request and permit the subscriber server (140) to register the address of the selected second server (132) in the subscriber server (140), to replace the first server (131) in being assigned to the UE (122) for the session control,
based on the registration request comprising the indication, *perform* the registering to replace the first server (131) with the selected second server (132) to be assigned to the UE (122) for session control for said session.

## Patentansprüche

1. Verfahren, das von einem ersten Internetprotokoll-Multimedia-Subsystem-Knoten, IMS-Knoten, (110) durchgeführt wird, zur Handhabung eines Aufbaus einer Sitzung zur Kommunikation mit einer Benutzereinrichtung, UE, (122) in einem Kommunikationsnetzwerk (100), wobei der UE (122) ein erster Server (131) zur Sitzungssteuerung der Sitzung zugewiesen ist, wobei das Verfahren Folgendes umfasst:
Senden (203), wenn bestimmt wird, dass der erste Server (131) beim Aufbauen der Sitzung nicht verfügbar ist, oder wenn entschieden wird, dass der erste Server (131) beim Aufbauen der Sitzung ersetzt werden soll, einer Anforderung an einen Teilnehmerserver (140), der mit der UE (122) assoziiert ist, wobei die Anforderung Hilfsdaten zum Auswählen eines zweiten Servers (132) anfordert, der der UE (122) zur Sitzungssteuerung zugewiesen werden soll,
Auswählen (205) eines zweiten Servers (132), der der UE (122) zur Sitzungssteuerung zugewiesen werden soll, basierend auf den angeforderten Hilfsdaten bei ihrem Empfang von dem Teilnehmerserver (140),
Senden (206) einer Einladung an den ausgewählten zweiten Server (132), wobei sich die Einladung auf das Aufbauen der Sitzung bezieht, wobei die Einladung eine Anzeige umfasst, dass Neuauswahl stattgefunden hat und dass der ausgewählte zweite Server (132) ausgewählt wird, um den ersten Server (131) bei der Zuweisung zu der UE (122) zur Sitzungssteuerung zu ersetzen, und
wobei die Anzeige den ausgewählten zweiten Server (132) auslöst, um dem Teilnehmerserver (140) anzuzeigen, dass er die Adresse des ausgewählten zweiten Servers (132) im Teilnehmerserver (140) registrieren soll, um den ersten Server (131) bei der Zuweisung zu der UE (122) zur Sitzungssteuerung zu ersetzen,
wobei die Anzeige es dem Teilnehmerserver (140) ermöglicht, das Registrieren zur Ersetzung des ersten Servers (131) durch den ausgewählten zweiten Server (132) bei der Zuweisung zu der UE (122) zur Sitzungssteuerung für die Sitzung durchzuführen.

2. Verfahren nach Anspruch 1, wobei eines oder mehreres von Folgendem zutrifft:
die Anzeige ist in einem Routing-Header der Einladung umfasst und
die Einladung ist eine Sitzungseinleitungsprotokoll-Anforderungsnachricht, SIP-Anforderungsnachricht.

3. Verfahren nach einem der Ansprüche 1-2, wobei die Anforderung eine oder mehrere von folgenden ist:
eine Hypertext Transport Protocol-GET-Anforderung, HTTP-GET-Anforderung, und
eine Diameter-Anforderungsnachricht.

4. Verfahren nach einem der Ansprüche 1-3, ferner umfassend:
Empfangen (201) einer Einladungsanforderung von einem Endknoten, z. B. einer rufenden UE (121), wobei die Einladungsanforderung die Einladung bezüglich des Aufbauens der Sitzung zur Kommunikation mit der UE (122) umfasst, und
Senden (202) der Einladung an den ersten Server (131), der der UE (122) zugewiesen ist.

5. Verfahren, das von einem zweiten Server (132) durchgeführt wird, zur Handhabung eines Aufbaus einer Sitzung zur Kommunikation mit einer Benutzereinrichtung, UE, (122) in einem Kommunikationsnetzwerk (100), wobei der UE (122) ein erster Server (131) zur Sitzungssteuerung der Sitzung zugewiesen ist, wobei das Verfahren Folgendes umfasst:
Empfangen (301) einer Einladung von einem ersten IMS-Knoten (110), wobei sich die Einladung auf das Aufbauen der Sitzung bezieht, wobei die Einladung eine Anzeige umfasst, dass Neuauswahl stattgefunden hat, und anzeigt, dass der zweite Server (132) ausgewählt wird, um den ersten Server (131) bei der Zuweisung zu der UE (122) zur Sitzungssteuerung zu ersetzen, und
ausgelöst durch die Einladung Senden (302) einer Registrierungsanforderung an einen Teilnehmerserver (140), der mit der UE (122) assoziiert ist, wobei die Registrierungsanforderung die Anzeige umfasst, dass Neuauswahl stattgefunden hat, und
wobei die Registrierungsanforderung den Teilnehmerserver (140) auffordert, die Adresse des ausgewählten zweiten Servers (132) im Teilnehmerserver (140) zu registrieren, um den ersten Server (131) bei der Zuweisung zu der UE (122) zur Sitzungssteuerung zu ersetzen,
wobei die Anzeige es dem Teilnehmerserver (140) ermöglicht, das Registrieren zur Ersetzung des ersten Servers (131) durch den ausgewählten zweiten Server (132) bei der Zuweisung zu der UE (122) zur Sitzungssteuerung für die Sitzung durchzuführen.

6. Verfahren nach Anspruch 5, wobei eines oder mehreres von Folgendem zutrifft:
die Anzeige ist in einem Routing-Header der Einladung umfasst und
die Einladung ist eine Sitzungseinleitungsprotokoll-Anforderungsnachricht, SIP-Anforderungsnachricht.

7. Verfahren nach einem der Ansprüche 5-6, wobei die Registrierungsanforderung eine oder mehrere von folgenden ist:
eine Hypertext Transport Protocol-PUT-Anforderung, HTTP-PUT-Anforderung, und
eine Diameter-Anforderungsnachricht.

8. Verfahren, das von einem Teilnehmerserver (140) durchgeführt wird, zur Handhabung eines Aufbaus einer Sitzung zur Kommunikation mit einer Benutzereinrichtung, UE, (122) in einem Kommunikationsnetzwerk (100), wobei der UE (122) ein erster Server (131) zur Sitzungssteuerung der Sitzung zugewiesen ist und wobei der Teilnehmerserver (140) mit der UE (122) assoziiert ist, wobei das Verfahren Folgendes umfasst:
Empfangen (401) einer Anforderung von einem ersten IMS-Knoten (110), der mit der UE (122) assoziiert ist, wobei die Anforderung Hilfsdaten zum Auswählen eines zweiten Servers (132) anfordert, der der UE (122) zur Sitzungssteuerung zugewiesen werden soll,
Senden (402) der angeforderten Hilfsdaten an den ersten IMS-Knoten (110),
Empfangen (403) einer Registrierungsanforderung von dem zweiten Server (132), die eine Anzeige umfasst, dass Neuauswahl stattgefunden hat, und anzeigt, dass der zweite Server (132) basierend auf den Hilfsdaten ausgewählt wurde, um den ersten Server (131) bei der Zuweisung zu der UE (122) zur Sitzungssteuerung zu ersetzen, wobei die Registrierungsanforderung, die die Anzeige umfasst, den Teilnehmerserver (140) dazu auffordert und es diesem ermöglicht, die Adresse des ausgewählten zweiten Servers (132) im Teilnehmerserver (140) zur Ersetzung des ersten Servers (131) bei der Zuweisung zu der UE (122) zur Sitzungssteuerung für die Sitzung zu registrieren,
Durchführen (404) des Registrierens zur Ersetzung des ersten Servers (131) durch den ausgewählten zweiten Server (132) bei der Zuweisung zu der UE (122) zur Sitzungssteuerung für die Sitzung basierend auf der Registrierungsanforderung, die die Anzeige umfasst.

9. Verfahren nach Anspruch 8, wobei die Registrierungsanforderung eine oder mehrere von folgenden ist:
eine Hypertext Transport Protocol-PUT-Anforderung, HTTP-GET-Anforderung, und
eine Diameter-Anforderungsnachricht.

10. Verfahren nach einem der Ansprüche 8-9, wobei die Anforderung eine oder mehrere von folgenden ist:
eine HTTP-GET-Anforderung und
eine Diameter-Anforderungsnachricht.

11. Verfahren nach einem der Ansprüche 8-10, wobei die Anforderung empfangen wird, wenn eines oder mehreres von Folgendem zutrifft:
- der erste IMS-Knoten (110) bestimmt, dass der erste Server (131) beim Aufbauen der Sitzung nicht verfügbar ist, oder
- es wird entschieden, dass der erste Server (131) beim Aufbauen der Sitzung ersetzt werden soll.

12. Erster Internetprotokoll-Multimedia-Subsystem-Knoten, IMS-Knoten, (110), der zum Handhaben eines Aufbaus einer Sitzung zur Kommunikation mit einer Benutzereinrichtung, UE, (122) in einem Kommunikationsnetzwerk (100) konfiguriert ist, wobei die UE (122) so ausgelegt ist, dass ihr ein erster Server (131) zur Sitzungssteuerung der Sitzung zugewiesen ist, wobei der erste IMS-Knoten (110) ferner zu Folgendem konfiguriert ist:
Senden, wenn bestimmt wird, dass der erste Server (131) beim Aufbauen der Sitzung nicht verfügbar ist, oder wenn entschieden wird, dass der erste Server (131) beim Aufbauen der Sitzung ersetzt werden soll, einer Anforderung an einen Teilnehmerserver (140), der so ausgelegt ist, dass er mit der UE (122) assoziiert ist, wobei die Anforderung so ausgelegt ist, dass sie Hilfsdaten zum Auswählen eines zweiten Servers (132) anfordert, der der UE (122) zur Sitzungssteuerung zugewiesen werden soll,
Auswählen eines zweiten Servers (132), der der UE (122) zur Sitzungssteuerung zugewiesen werden soll, basierend auf den angeforderten Hilfsdaten bei ihrem Empfang von dem Teilnehmerserver (140),
Senden einer Einladung an den ausgewählten zweiten Server (132), wobei die Einladung so ausgelegt ist, dass sie sich auf das Aufbauen der Sitzung bezieht, wobei die Einladung ferner so ausgelegt ist, dass sie eine Anzeige umfasst, die so ausgelegt ist, dass sie anzeigt, dass Neuauswahl stattgefunden hat und dass der ausgewählte zweite Server (132) ausgewählt wird, um den ersten Server (131) bei der Zuweisung zu der UE (122) zur Sitzungssteuerung zu ersetzen, und
wobei die Anzeige ferner so ausgelegt ist, dass sie den ausgewählten zweiten Server (132) auslöst, um dem Teilnehmerserver (140) anzuzeigen, dass er die Adresse des ausgewählten zweiten Servers (132) im Teilnehmerserver (140) registrieren soll, um den ersten Server (131) bei der Zuweisung zu der UE (122) zur Sitzungssteuerung zu ersetzen,
wobei die Anzeige ferner so ausgelegt ist, dass sie es dem Teilnehmerserver (140) ermöglicht, das Registrieren zur Ersetzung des ersten Servers (131) durch den ausgewählten zweiten Server (132) bei der Zuweisung zu der UE (122) zur Sitzungssteuerung für die Sitzung durchzuführen.

13. Zweiter Server (132), der zum Handhaben eines Aufbaus einer Sitzung zur Kommunikation mit einer Benutzereinrichtung, UE, (122) in einem Kommunikationsnetzwerk (100) konfiguriert ist, wobei die UE (122) so ausgelegt ist, dass ihr ein erster Server (131) zur Sitzungssteuerung der Sitzung zugewiesen ist, wobei der zweite Server (132) ferner zu Folgendem konfiguriert ist:
Empfangen einer Einladung von einem ersten IMS-Knoten (110), wobei die Einladung so ausgelegt ist, dass sie sich auf das Aufbauen der Sitzung bezieht, und wobei die Einladung ferner so ausgelegt ist, dass sie eine Anzeige umfasst, dass Neuauswahl stattgefunden hat und die anzeigt, dass der zweite Server (132) ausgewählt wird, um den ersten Server (131) bei der Zuweisung zu der UE (122) zur Sitzungssteuerung zu ersetzen, und
ausgelöst durch die Einladung Senden einer Registrierungsanforderung an einen Teilnehmerserver (140), der so ausgelegt ist, dass er mit der UE (122) assoziiert ist, wobei die Registrierungsanforderung so ausgelegt ist, dass sie die Anzeige umfasst, dass Neuauswahl stattgefunden hat, und
wobei die Registrierungsanforderung ferner so ausgelegt ist, dass sie den Teilnehmerserver (140) auffordert, die Adresse des ausgewählten zweiten Servers (132) im Teilnehmerserver (140) zu registrieren, um den ersten Server (131) bei der Zuweisung zu der UE (122) zur Sitzungssteuerung zu ersetzen,
wobei die Anzeige so ausgelegt ist, dass sie es dem Teilnehmerserver (140) ermöglicht, das Registrieren zur Ersetzung des ersten Servers (131) durch den ausgewählten zweiten Server (132) bei der Zuweisung zu der UE (122) zur Sitzungssteuerung für die Sitzung durchzuführen.

14. Teilnehmerserver (140), der zum Handhaben eines Aufbaus einer Sitzung zur Kommunikation mit einer Benutzereinrichtung, UE, (122) in einem Kommunikationsnetzwerk (100) konfiguriert ist, wobei die UE (122) so ausgelegt ist, dass ihr ein erster Server (131) zur Sitzungssteuerung der Sitzung zugewiesen ist, und wobei der Teilnehmerserver (140) so ausgelegt ist, dass er mit der UE (122) assoziiert ist, wobei der Teilnehmerserver (140) ferner zu Folgendem konfiguriert ist:
Empfangen einer Anforderung von einem ersten IMS-Knoten (110), der so ausgelegt ist, dass er mit der UE (122) assoziiert ist, wobei die Anforderung so ausgelegt ist, dass sie Hilfsdaten zum Auswählen eines zweiten Servers (132) anfordert, der der UE (122) zur Sitzungssteuerung zugewiesen werden soll,
Senden der angeforderten Hilfsdaten an den ersten IMS-Knoten (110),
Empfangen einer Registrierungsanforderung von dem zweiten Server (132), die so ausgelegt ist, dass sie eine Anzeige umfasst, dass Neuauswahl stattgefunden hat und dass der zweite Server (132) basierend auf den Hilfsdaten ausgewählt wurde, um den ersten Server (131) bei der Zuweisung zu der UE (122) zur Sitzungssteuerung zu ersetzen, wobei die Registrierungsanforderung, die die Anzeige umfasst, ferner dazu ausgelegt ist, den Teilnehmerserver (140) dazu aufzufordern und es diesem zu ermöglichen, die Adresse des ausgewählten zweiten Servers (132) im Teilnehmerserver (140) zur Ersetzung des ersten Servers (131) bei der Zuweisung zu der UE (122) zur Sitzungssteuerung für die Sitzung zu registrieren,
Durchführen des Registrierens zur Ersetzung des ersten Servers (131) durch den ausgewählten zweiten Server (132) bei der Zuweisung zu der UE (122) zur Sitzungssteuerung für die Sitzung basierend auf der Registrierungsanforderung, die die Anzeige umfasst.

## Revendications

1. Procédé réalisé par un premier nœud de sous-système multimédia de protocole Internet, IMS, (110) pour gérer un établissement d'une session de communication avec un équipement utilisateur, UE, (122) dans un réseau de communication (100), dans lequel un premier serveur (131) est attribué à l'UE (122) pour une commande de session de la session, le procédé comprenant :
l'envoi (203), lors de la détermination que le premier serveur (131) est indisponible à l'établissement de la session, ou lors de la décision que le premier serveur (131) doit être remplacé à l'établissement de la session, d'une demande à un serveur d'abonnés (140) associé à l'UE (122), laquelle demande demande des données d'assistance pour sélectionner un deuxième serveur (132), à attribuer à l'UE (122) pour la commande de session,
la sélection (205) d'un deuxième serveur (132) à attribuer à l'UE (122) pour une commande de session, sur la base des données d'assistance demandées lorsqu'elles sont reçues depuis le serveur d'abonnés (140),
l'envoi (206) d'une invitation au deuxième serveur (132) sélectionné, laquelle invitation concerne l'établissement de la session, laquelle invitation comprend une indication qu'une resélection est survenue et que le deuxième serveur (132) sélectionné est sélectionné pour remplacer le premier serveur (131) en étant attribué à l'UE (122) pour une commande de session, et
laquelle indication déclenche le deuxième serveur (132) sélectionné, pour indiquer au serveur d'abonnés (140) d'enregistrer l'adresse du deuxième serveur (132) sélectionné dans le serveur d'abonnés (140), pour remplacer le premier serveur (131) en étant attribué à l'UE (122) pour la commande de session,
dans lequel l'indication permet au serveur d'abonnés (140) de réaliser l'enregistrement pour remplacer le premier serveur (131) par le deuxième serveur (132) sélectionné à attribuer à l'UE (122) pour une commande de session de ladite session.

2. Procédé selon la revendication 1, dans lequel l'un ou les deux cas suivants s'appliquent :
l'indication est comprise dans un en-tête de routage de l'invitation, et
l'invitation est un message de demande de protocole d'ouverture de session, SIP.

3. Procédé selon l'une quelconque des revendications 1 et 2, dans lequel la demande est l'un ou les deux parmi :
une demande GET de protocole de transport hypertexte, HTTP, et
un message de demande Diameter.

4. Procédé selon l'une quelconque des revendications 1 à 3, comprenant en outre :
la réception (201) d'une demande d'invitation, depuis un nœud d'extrémité, par exemple un UE appelant (121), laquelle demande d'invitation comprend l'invitation concernant l'établissement de la session pour la communication avec l'UE (122), et
l'envoi (202) de l'invitation au premier serveur (131) attribué à l'UE (122).

5. Procédé réalisé par un deuxième serveur (132) pour gérer un établissement d'une session de communication avec un équipement utilisateur, UE, (122) dans un réseau de communication (100), dans lequel un premier serveur (131) est attribué à l'UE (122) pour une commande de session de la session, le procédé comprenant :
la réception (301) d'une invitation depuis un premier nœud IMS (110), laquelle invitation concerne l'établissement de la session, laquelle invitation comprend une indication qu'une resélection est survenue et indiquant que le deuxième serveur (132) est sélectionné pour remplacer le premier serveur (131) en étant attribué à l'UE (122) pour une commande de session, et
déclenché par l'indication, l'envoi (302) d'une demande d'enregistrement à un serveur d'abonnés (140) associé à l'UE (122), laquelle demande d'enregistrement comprend l'indication qu'une resélection est survenue, et
laquelle demande d'enregistrement demande au serveur d'abonnés (140) d'enregistrer l'adresse du deuxième serveur (132) sélectionné dans le serveur d'abonnés (140), pour remplacer le premier serveur (131) en étant attribué à l'UE (122) pour la commande de session,
dans lequel l'indication permet au serveur d'abonnés (140) de réaliser l'enregistrement pour remplacer le premier serveur (131) par le deuxième serveur (132) sélectionné à attribuer à l'UE (122) pour une commande de session de ladite session.

6. Procédé selon la revendication 5, dans lequel l'un ou les deux cas suivants s'appliquent :
l'indication est comprise dans un en-tête de routage de l'invitation, et
l'invitation est un message de demande de protocole d'ouverture de session, SIP.

7. Procédé selon l'une quelconque des revendications 5 et 6, dans lequel la demande d'enregistrement est l'un ou les deux parmi :
une demande PUT de protocole de transport hypertexte, HTTP, et
un message de demande Diameter.

8. Procédé réalisé par un serveur d'abonnés (140) pour gérer un établissement d'une session de communication avec un équipement utilisateur, UE, (122) dans un réseau de communication (100), dans lequel un premier serveur (131) est attribué à l'UE (122) pour une commande de session de la session, et dans lequel le serveur d'abonnés (140) est associé à l'UE (122), le procédé comprenant :
la réception (401) d'une demande depuis un premier nœud IMS (110) associé à l'UE (122), laquelle demande demande des données d'assistance pour sélectionner un deuxième serveur (132), à attribuer à l'UE (122) pour la commande de session,
l'envoi (402) des données d'assistance demandées au premier nœud IMS (110),
la réception (403) d'une demande d'enregistrement depuis le deuxième serveur (132) comprenant une indication qu'une resélection est survenue et indiquant que le deuxième serveur (132) a été sélectionné, sur la base des données d'assistance, pour remplacer le premier serveur (131) en étant attribué à l'UE (122) pour une commande de session, la demande d'enregistrement comprenant l'indication, demande et permet au serveur d'abonnés (140) d'enregistrer l'adresse du deuxième serveur (132) sélectionné dans le serveur d'abonnés (140), pour remplacer le premier serveur (131) en étant attribué à l'UE (122) pour la commande de session,
sur la base de la demande d'enregistrement comprenant l'indication, la réalisation (404) de l'enregistrement pour remplacer le premier serveur (131) par le deuxième serveur (132) sélectionné à attribuer à l'UE (122) pour une commande de session de ladite session.

9. Procédé selon la revendication 8, dans lequel la demande d'enregistrement est l'un ou les deux parmi :
une demande PUT de protocole de transport hypertexte, HTTP, et
un message de demande Diameter.

10. Procédé selon l'une quelconque des revendications 8 et 9, dans lequel la demande est l'un ou les deux parmi :
une demande GET HTTP, et
un message de demande Diameter.

11. Procédé selon l'une quelconque des revendications 8 à 10, la demande est reçue dans l'un des cas suivants :
- le premier nœud IMS (110) détermine que le premier serveur (131) est indisponible à l'établissement de la session, ou
- il est décidé que le premier serveur (131) doit être remplacé à l'établissement de la session.

12. Premier nœud de système multimédia de protocole Internet, IMS, (110) configuré pour gérer un établissement d'une session de communication avec un équipement utilisateur, UE, (122) dans un réseau de communication (100), dans lequel l'UE (122) est adapté pour qu'il lui soit attribué un premier serveur (131) pour une commande de session de la session, dans lequel le premier nœud IMS (110) est en outre configuré pour :
envoyer, lors de la détermination que le premier serveur (131) est indisponible à l'établissement de la session, ou lors de la décision que le premier serveur (131) doit être remplacé à l'établissement de la session, une demande à un serveur d'abonnés (140) adapté pour être associé à l'UE (122), laquelle demande est adaptée pour demander des données d'assistance pour sélectionner un deuxième serveur (132) à attribuer à l'UE (122) pour la commande de session,
sélectionner un deuxième serveur (132) à attribuer à l'UE (122) pour une commande de session, sur la base des données d'assistance demandées lorsqu'elles sont reçues depuis le serveur d'abonnés (140),
envoyer une invitation au deuxième serveur (132) sélectionné, laquelle invitation est adaptée pour concerner l'établissement de la session, laquelle invitation est en outre adaptée pour comprendre une indication adaptée pour indiquer qu'une resélection est survenue et que le deuxième serveur (132) sélectionné est sélectionné pour remplacer le premier serveur (131) en étant attribué à l'UE (122) pour une commande de session, et
laquelle indication est en outre adaptée pour déclencher le deuxième serveur (132) sélectionné, pour indiquer au serveur d'abonnés (140) d'enregistrer l'adresse du deuxième serveur (132) sélectionné dans le serveur d'abonnés (140), pour remplacer le premier serveur (131) en étant attribué à l'UE (122) pour la commande de session,
dans lequel l'indication est en outre adaptée pour permettre au serveur d'abonnés (140) de réaliser l'enregistrement pour remplacer le premier serveur (131) par le deuxième serveur (132) sélectionné à attribuer à l'UE (122) pour une commande de session de ladite session.

13. Deuxième serveur (132) configuré pour gérer un établissement d'une session de communication avec un équipement utilisateur, UE, (122) dans un réseau de communication (100), dans lequel l'UE (122) est adapté pour qu'il lui soit attribué un premier serveur (131) pour une commande de session de la session, dans lequel le deuxième serveur (132) est en outre configuré pour :
recevoir une invitation depuis un premier nœud IMS (110), laquelle invitation est adaptée pour concerner l'établissement de la session, et laquelle invitation est en outre adaptée pour comprendre une indication qu'une resélection est survenue et indiquant que le deuxième serveur (132) est sélectionné pour remplacer le premier serveur (131) en étant attribué à l'UE (122) pour une commande de session, et
déclenché par l'indication, envoyer une demande d'enregistrement à un serveur d'abonnés (140) adapté pour être associé à l'UE (122), laquelle demande d'enregistrement est adaptée pour comprendre l'indication qu'une resélection est survenue, et
laquelle demande d'enregistrement est en outre adaptée pour demander au serveur d'abonnés (140) d'enregistrer l'adresse du deuxième serveur (132) sélectionné dans le serveur d'abonnés (140), pour remplacer le premier serveur (131) en étant attribué à l'UE (122) pour la commande de session,
dans lequel l'indication est adaptée pour permettre au serveur d'abonnés (140) de réaliser l'enregistrement pour remplacer le premier serveur (131) par le deuxième serveur (132) sélectionné à attribuer à l'UE (122) pour une commande de session de ladite session.

14. Serveur d'abonnés (140) configuré pour gérer un établissement d'une session de communication avec un équipement utilisateur, UE, (122) dans un réseau de communication (100), dans lequel l'UE (122) est adapté pour qu'il lui soit attribué un premier serveur (131) pour une commande de session de la session, et dans lequel le serveur d'abonnés (140) est adapté pour être associé à l'UE (122), dans lequel le serveur d'abonnés (140) est en outre configuré pour :
recevoir une demande depuis un premier nœud IMS (110) adapté pour être associé à l'UE (122), laquelle demande est adaptée pour demander des données d'assistance pour sélectionner un deuxième serveur (132), à attribuer à l'UE (122) pour la commande de session,
envoyer les données d'assistance demandées au premier nœud IMS (110),
recevoir une demande d'enregistrement depuis le deuxième serveur (132) adaptée pour comprendre une indication qu'une resélection est survenue et que le deuxième serveur (132) a été sélectionné, sur la base des données **d'assistance,** pour remplacer le premier serveur (131) en étant attribué à l'UE (122) pour une commande de session, la demande d'enregistrement comprenant l'indication est en outre adaptée pour demander et permettre au serveur d'abonnés (140) d'enregistrer l'adresse du deuxième serveur (132) sélectionné dans le serveur d'abonnés (140), pour remplacer le premier serveur (131) en étant attribué à l'UE (122) pour la commande de session,
sur la base de la demande d'enregistrement comprenant l'indication, réaliser l'enregistrement pour remplacer le premier serveur (131) par le deuxième serveur (132) sélectionné à attribuer à l'UE (122) pour une commande de session de ladite session.
